Europäisches Patentamt

European Patent Office

Office européen des brevets

(11) Numéro de publication : **0 093 667 B1**

(12) **FASCICULE DE BREVET EUROPÉEN**

(45) Date de publication du fascicule du brevet :
05.03.86

(51) Int. Cl.⁴ : **A 47 J 37/07**, **F 24 C 15/20**, **A 47 J 37/06**

(21) Numéro de dépôt : **83400858.3**

(22) Date de dépôt : **29.04.83**

(54) **Barbecue utilisable en atmosphère confinée notamment dans une cuisine.**

(30) Priorité : **30.04.82 FR 8207566**

(43) Date de publication de la demande :
**09.11.83 Bulletin 83/45**

(45) Mention de la délivrance du brevet :
**05.03.86 Bulletin 86/10**

(84) Etats contractants désignés :
**AT BE CH DE GB IT LI LU NL SE**

(56) Documents cités :
**DE-A- 2 507 302**
**GB-A-   354 570**
**US-A- 2 850 991**
**US-A- 3 933 145**

(73) Titulaire : **ASSOCIATION DE PLACEMENT ET D'AIDE POUR JEUNES HANDICAPES**
**13-27 Impasse Armand Saffray**
**F-72000 Le Mans (FR)**

(72) Inventeur : **Gamin, Daniel**
**59 Rue Gaston Guillemet**
**F-85200 Fontenay Le Comte (FR)**
Inventeur : **Pannier, Roger**
**l'Orbrie Pissotte**
**F-85200 Fontenay Le Comte (FR)**

(74) Mandataire : **Lemonnier, André**
**4 Boulevard Saint-Denis**
**F-75010 Paris (FR)**

## Description

Les barbecues sont des foyers ouverts pour la confection de grillades qui brûlent de préférence du charbon de bois et qui sont utilisés à l'extérieur des habitations.

On a déjà proposé, pour allumer rapidement les barbecues malgré la température d'allumage élevée du charbon de bois, de souffler ceux-ci en injectant de l'air dans le foyer au moyen d'un ventilateur à main ou électrique. Ceci est illustré par exemple par FR-A-2 404 418 et FR-A-2 434 605. Cette technique n'était toutefois pas nouvelle car depuis de nombreuses décennies les foyers de forge, notamment les petits foyers portatifs, étaient soufflés au moyen d'une turbine actionnée manuellement.

On connaît enfin du US-A-3 933 145 un barbecue, ne comportant ni conduit d'évacuation ou cheminée dans lequel barbecue on souffle purement et simplement sous le foyer un certain débit de gaz aspiré sous une hotte. Les fumées dont le volume est supérieur à celui de l'air de combustion vont être refoulées dans l'environnement.

On a également déjà proposé d'installer des barbecues à l'intérieur notamment dans des cheminées mais, à la connaissance des inventeurs, on n'a jamais réalisé un barbecue d'intérieur se présentant sous la forme d'un élément de cuisine de dimensions standardisées.

Cette incorporation d'un barbecue dans un ensemble de cuisine présentait des problèmes spécifiques consistant à maitriser les dégagements gazeux du foyer ouvert, notamment en assurant un allumage rapide, et à limiter autant que possible la transmission calorifique vers les éléments voisins.

On pouvait penser résoudre ces problèmes par des moyens classiques notamment en soufflant le barbecue, en évacuant par un tirage mécanique les gaz du foyer et en isolant très soigneusement le foyer de la carrosserie du barbecue par une masse importante d'isolant thermique. Ces solutions étaient complexes et onéreuses car elles exigeaient un extracteur d'évacuation des gaz, un ventilateur de soufflage et énormément d'isolant thermique.

L'invention est basée sur la constatation que le volume d'air nécessaire pour le soufflage est relativement faible surtout après la période d'allumage et si l'air soufflé est déjà chaud et l'idée inventive a consisté à utiliser la surpression dynamique régnant en aval de l'extracteur de la hotte d'évacuation des gaz pour réinjecter une partie de ces gaz dans le foyer du barbecue.

En conséquence et conformément à l'invention le barbecue utilisable en atmosphère confinée notamment dans une cuisine lequel comporte un foyer avec un cendrier, une hotte au-dessus de ce foyer et un extracteur mécanique aspirant sous la hotte et refoulant dans un conduit d'évacuation, est caractérisé en ce qu'il comporte une prise d'air dynamique montée dans le conduit d'évacuation et reliée par une conduite comportant de préférence un moyen de réglage du débit, à une boîte à vent située sous le foyer et communiquant avec le volume du foyer.

L'invention a résulté de l'observation que le volume d'air aspiré dans la hotte avec un extracteur suffisamment efficace pour un foyer ouvert est très important par rapport au volume des gaz de combustion qu'il contient, qu'en conséquence il présente une teneur en oxygène presque normale même après l'allumage complet du barbecue et que sa température reste faible, ce qui permet de l'utiliser pour le soufflage du barbecue et le refroidissement des parties constitutives du foyer.

Selon une autre caractéristique de l'invention, la boîte à vent entoure le cendrier et le foyer et le gaz recyclé est amené à circuler au contact du cendrier et d'au moins la partie inférieure du foyer avant d'être soufflé à travers la grille du foyer.

Selon une autre caractéristique le foyer est supporté par le bord supérieur de la boîte à vent qui est elle-même reliée à la carrosserie par une chemise périphérique emboîtée avec un jeu dans la carrosserie, l'intervalle entre la boîte à vent et la chemise périphérique étant rempli d'isolant thermique. Avec cette caractéristique la transmission calorifique par conductibilité du bord supérieur du foyer à la carrosserie s'effectue par un chemin thermique comprenant une partie de la hauteur de la paroi de la boîte à vent, le fond du logement pour l'isolant et la hauteur de la chemise formant la paroi périphérique de ce logement, ce qui assure une dissipation thermique importante aussi bien des calories transmises par conductibilité que de celles radiées directement de la paroi extérieure du foyer vers la paroi de la boîte à vent.

L'invention sera mieux comprise à la lecture de la description d'un mode de réalisation faite ci-après avec référence au dessin ci-annexé dans lequel :

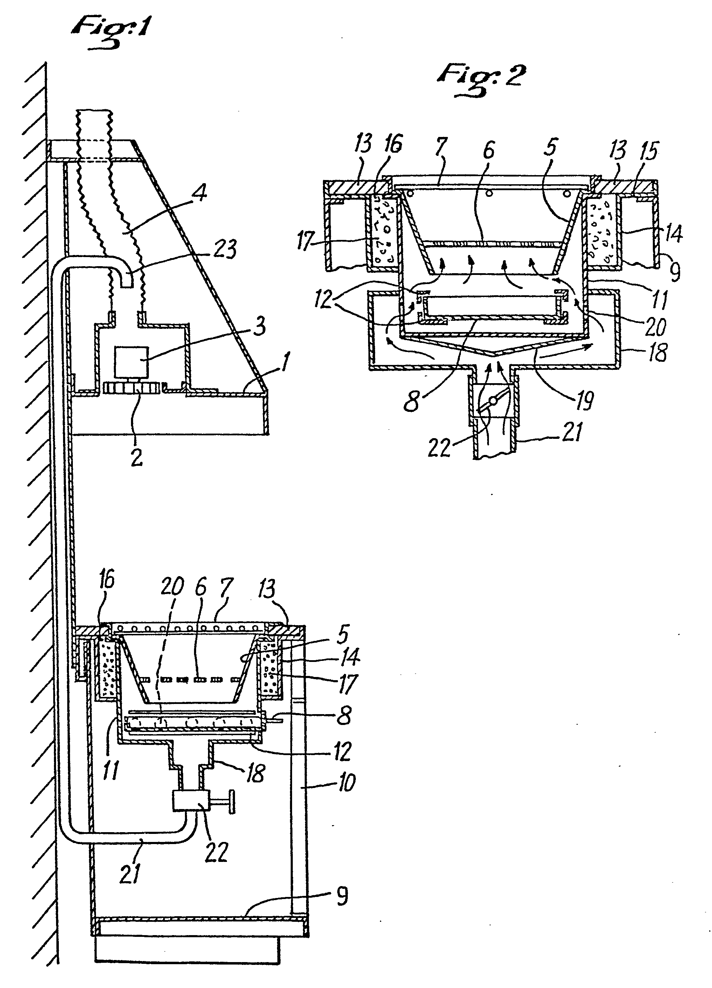

La figure 1 est une vue en coupe verticale axiale du barbecue conforme à l'invention et la figure 2 est une vue en coupe transversale du foyer.

Le barbecue conforme à l'invention comporte essentiellement une hotte 1 avec un extracteur 2 entraîné par un moteur électrique 3 pour aspirer sous la hotte et refouler par une canalisation souple ou analogue 4 vers la cheminée. Le barbecue proprement dit comporte un foyer 5 avec une grille supportant le charbon de bois 6 et une grille de cuisson 7. En dessous du foyer qui est ouvert en bas de façon connue est placé le cendrier 8. La référence 9 désigne la carrosserie du barbecue qui correspond à un meuble bas de cuisine avec une porte frontale 10.

Le foyer et le cendrier sont montés dans une boîte à vent 11 dans laquelle le cendrier est guidé par des rails de glissière 12. Le foyer 5 est supporté par appui de son bord périphérique supérieur sur le bord supérieur de la boîte à vent qui comporte également une gorge périphérique dirigée vers l'extérieur pour l'emboîtement des carreaux céramiques 13 qui constituent le plateau périphérique. La boîte à vent 11 est elle-même supportée par une chemise périphérique 14 qui s'appuie par un flasque 15 entourant son bord supérieur sur la carrosserie 9. Les bords supérieurs de la boîte à vent et de la chemise périphérique sont isolés par un intervalle 16 ce qui évite toute transmission calorifique directe par conduction entre la boîte à vent ou le foyer et la carrosserie, cette transmission ne pouvant se faire que le long de la chemise périphérique suivant un chemin thermique allongé. L'espace 17 entre la boîte à vent 11 et la chemise 14 est rempli de laine de verre ou autre isolant thermique pour éviter la transmission calorifique par rayonnement.

Autour de la partie inférieure de la boîte à vent 11 est montée une gaine à vent 18 avec un déflecteur 19. Cette gaine à vent 18 communique avec l'espace intérieur de la boîte à vent par des orifices 20 situés latéralement à la hauteur du cendrier 8. Au centre de la gaine à vent 18 débouche une canalisation 21 munie d'un volet de réglage 22. L'air arrivant par cette canalisation 21 se répartit dans la gaine à vent 18, est soufflé par les orifices 20 contre le cendrier 8 qu'il refroidit, puis arrive selon les flèches sous la grille 6 en contournant le bord inférieur du foyer 5. On assure ainsi un courant d'air forcé et réchauffé à travers la masse de combustible surmontant la grille 6.

Conformément à la caractéristique principale de l'invention, la canalisation 21 remonte jusqu'à la hotte et forme une crosse 23 qui débouche vers le bas sensiblement dans l'axe de la conduite 4. Les gaz constitués en majeure partie par de l'air frais extraits par l'extracteur 2, pour partie sont repris par la crosse 23 et ramenés par la canalisation 21 pour souffler et refroidir le foyer du barbecue et pour partie sont évacués à la cheminée. L'expérience a montré qu'une très faible partie du mélange gazeux refoulé était, surtout après l'allumage, suffisante pour le soufflage du barbecue et le réglage de ce débit peut se faire grâce à la vanne 22.

**Revendications**

1. Un barbecue utilisable en atmosphère confinée, notamment dans une cuisine lequel comporte un foyer (5) avec un cendrier (8), une hotte (1) au-dessus de ce foyer et un extracteur mécanique (2) aspirant sous la hotte et refoulant dans un conduit d'évacuation (4), caractérisé en ce qu'il comporte une prise d'air dynamique (23) montée dans le conduit d'évacuation (4) et reliée par une conduite (21) comportant de préférence un moyen de réglage du débit (22), à une boîte à vent 11 située sous le foyer et communiquant avec le volume du foyer.

2. Un barbecue selon la revendication 1, caractérisé en ce que la boîte à vent 11 entoure le cendrier (8) et le foyer (5) et en ce que le gaz recyclé est amené à circuler au contact du cendrier et d'au moins la partie inférieure du foyer avant d'être soufflé à travers la grille (6) du foyer.

3. Un barbecue selon l'une quelconque des revendications 1 et 2, caractérisé en ce que le foyer (5) est supporté par le bord supérieur de la boîte à vent (11) qui est elle-même reliée à la carrosserie (9) par une chemise périphérique (14) emboîtée avec un jeu dans la carrosserie, l'intervalle (17) entre la boîte à vent et la chemise périphérique étant rempli d'isolant thermique.

**Claims**

1. A barbecue usable in a confined area, notably in a kitchen, comprising a hearth (5) with an ash box (8), a cowl (1) above said hearth, and a mechanical extractor (2) sucking up underneath the cowl and delivering in a discharge conduit (4), characterized in that it comprises a dynamic air intake (23) mounted in the discharge conduit (4) and connected, via a duct (21) including preferably a flow rate setting means (22), to a wind box situated underneath the hearth and communicating with the hearth volume.

2. A barbecue according to claim 1, characterized in that the wind box surrounds the ash box (8) and the hearth (5), and the recycled gas is caused to circulate in contact with the ash box and with at least the lower portion of the hearth prior to being blown through the hearth grid (6).

3. A barbecue according to any one of claims 1 and 2, characterized in that the hearth (5) is supported by the upper edge of the wind box (11) which is in turn connected to the body (9) by a peripheral jacket (14) fitted with a clearance into the body, the space (17) between the wind box and the peripheral jacket being filled with a thermal insulating material.

**Patentansprüche**

1. In geschlossenen Räumen, insbesondere Küchen, verwendbare Grillvorrichtung mit einem einen Aschebehälter (8) aufweisenden Heizraum (5), einer Abzugshaube (1) über dem Heizraum und einer maschinenangetriebenenen Abzugsvorrichtung (2), die unter der Abzugshaube ansaugt und in ein Ableitungsrohr (4) fördert, gekennzeichnet durch eine dynamische Lufteintrittseinrichtung (23), die in dem Ableitungsrohr (4) angeordnet ist und über eine Rohrleitung (21), die vorzugsweise eine Durchflußmengenregeleinrichtung (22) aufweist, an einen Windkasten (11) angeschlossen ist, der unter dem Heizraum angeordnet ist und mit dem Heizraum in Verbindung steht.

2. Grillvorrichtung nach Anspruch 1, dadurch gekennzeichnet, daß der Windkasten (11) den Aschebehälter (8) und den Heizraum (5) umgibt und daß das zurückgeführte Gas um den Aschebehälter und wenigstens um das untere Teil des Heizraumes herumgeführt ist, bevor es durch den Rost (6) des Heizraumes geblasen wird.

3. Grillvorrichtung nach Anspruch 1 oder 2, dadurch gekennzeichnet, daß der Heizraum (5) vom oberen Rand des Windkastens (11) getragen ist, der selbst mit dem Gehäuse (9) durch einen mit Abstand innerhalb des Gehäuses angeordneten Umfangsmantel (14) verbunden ist, wobei der Zwischenraum (17) zwischen dem Windkasten und dem Umfangsmantel mit einem Wärmeisolierstoff ausgefüllt ist.

*Fig:1*

*Fig:2*